# FASCICULE DE BREVET EUROPEEN

(11) **EP 1 314 232 B1**
(45) Date de publication et mention de la délivrance du brevet: **27.10.2004**
(21) Numéro de dépôt: 01965374.0
(22) Date de dépôt: 29.08.2001
(51) Int. Cl.: H02G 3/00

(54) **DISPOSITIF DE PRECABLAGE DANS UNE INSTALLATION DE CABLAGE ET PROCEDE DE MISE EN OEUVRE**
VORVERDRAHTUNGSVORRICHTUNG FÜR VERKABELUNGSANLAGEN UND DURCHFÜHRUNGSVERFAHREN
PREWIRING DEVICE IN A WIRING INSTALLATION AND METHOD USING SAME

(30) Priorité: 01.09.2000 FR 0011175
(43) Date de publication de la demande: 28.05.2003
(73) Titulaire: FRANCE TELECOM, 75015 Paris (FR)
(72) Inventeur: REAU, Anne-Cécile, 22560 Pleumeur-Bodou (FR); PETIT, Alain, 22140 Pluzunet (FR); LECOQ, Daniel, 22140 Berhet (FR); GUEGUEN, Jean-Jacques, 22700 Saint Quay Perros (FR)
(74) Mandataire: Lemoyne, Didier
(86) Numéro de dépôt international: PCT/FR2001/002693
(87) Numéro de publication internationale: WO 2002/019490

(56) Documents cités:
- DE-U- 29 521 454
- US-A- 3 689 031
- US-A- 4 902 853

## Description

La présente invention concerne un dispositif de précâblage dans une installation de câblage. Elle concerne également un procédé de mise en oeuvre dudit dispositif de précâblage.

L'invention trouve une application particulièrement avantageuse dans le domaine du précâblage de bâtiments au moyen de tubes de précâblage.

D'une manière générale, le câblage d'un bâtiment s'effectue selon une architecture parfaitement normalisée (EN 50173-ISO 11801). Un répartiteur général, le plus souvent situé dans le sous-sol du bâtiment, distribue des câbles verticaux vers des répartiteurs d'étage, ou sous-répartiteurs, en empruntant des colonnes techniques. Puis, les répartiteurs d'étage desservent plusieurs points d'accès de bureaux par un câblage dit horizontal. Ainsi, le répartiteur général est le point de raccordement des câbles du réseau public et des câbles verticaux, tandis que les répartiteurs d'étage reçoivent les câbles verticaux et les câbles horizontaux, ainsi que les câbles de rocade et les équipements de réseau qui sont partagés.

Pratiquement, le raccordement des points d'accès au niveau des répartiteurs d'étage est réalisé dans des installations de câblage, comme par exemple les baies de câblage. Une baie de câblage est un bâti dont les dimensions sont normalisées. Elle peut être habillée par une porte et des cloisons et est alors désignée sous le nom d' « armoire ».

Une baie de câblage est équipée de plusieurs panneaux de brassage dont certains constituent les points d'arrivée des câbles verticaux, tandis que d'autres représentent les points de départ des câbles horizontaux vers les points d'accès. Pour partager un équipement sur plusieurs points d'accès, des jarretières, à une fibre optique par exemple, sont posées de manière à relier les différents panneaux de brassage (plateaux, tiroirs,...).

Dans le cas d'un précâblage ou d'un câblage, tous les panneaux de brassage sont en place dans la baie et tous les câbles horizontaux sont préalablement arrimés en fond de baie à l'arrière des panneaux. L'installateur n'a donc plus à intervenir par la suite. Le câblage de la baie est fixe et les raccordements aux tiroirs d'équipement se font sans difficulté au fur et à mesure des besoins par brassages et passages de jarretières face avant de la baie.

L'inconvénient de ce procédé de précâblage ou de câblage est que tous les panneaux de brassage et tous les câbles horizontaux doivent être installés dès l'origine dans l'installation de câblage, c'est-à-dire avant d'être effectivement utilisés, ce qui représente un coût important en matériel immobilisé.

Pour remédier à cet inconvénient, on peut mettre en oeuvre un précâblage par tubes. L'installation est alors équipée en deux temps : dans un premier temps, elle reçoit tous les tubes de précâblage qui sont arrimés en attente sur les panneaux de brassage, puis, dans un deuxième temps, les câbles sont installés progressivement, en fonction des besoins, par soufflage dans les tubes de précâblage. L'avantage de ce procédé est qu'il n'exige pas la mise en place préalable de tous les câbles, d'où une réduction du coût de l'installation initiale. Par contre, l'installation de câblage doit néanmoins être équipée dès le départ de tous les panneaux de brassage, entraînant ainsi un investissement élevé et un surdimensionnementde l'installation car le besoin réel n'est pas connu a priori du fait que le câblage est réalisé au fil de la demande. D'autre part, pour installer progressivement les câbles dans l'installation par soufflage, il faut avoir accès aux tubes de précâblage de manière permanente alors qu'ils sont déjà arrimés à l'arrière des panneaux de brassage. II est donc nécessaire de prévoir des tiroirs spéciaux, du type tiroir à glissière par exemple, entraînant un surcoût de l'installation. De plus, les tiroirs à glissière ne conviennent pas pour des tubes présentant une certaine rigidité et/ou un gros diamètre (8mm extérieur par exemple) car le faisceau de tubes risque alors de bloquer le mouvement des tiroirs. Les tubes peuvent être également blessés ou pincés, ce qui les rend hors d'usage pour un soufflage ultérieur. Par ailleurs, l'arrimage préalable des tubes de précâblage aux panneaux de brassage se traduit par un manque de flexibilité dans la gestion des câbles puisque le nombre de connecteurs en sortie de panneau est fixé à une valeur maximum (24 par exemple), le nombre de tubes vides est également fixé alors que le nombre de fibres par tube peut varier (1 à 8 par exemple). Enfin, le coût initial de l'installation reste important car il faut mettre en place tous les panneaux de brassage en même temps que les tubes de précâblage. Ceci est particulièrement vrai lorsque l'installation de câblage n'est pas accessible par la face arrière comme c'est généralement le cas dans les bâtiments anciens.

Le document US-A-3689031 décrit un dispositif de précâblage du genre mentionné ci-dessus.

Aussi, le problème technique à résoudre par l'objet de la présente invention est de proposer un dispositif de précâblage dans une installation de câblage, qui permettrait de remédier aux inconvénients présentés par le procédé de précâblage par tubes connu, notamment le coût élevé de l'investissement de départ dû à l'installation préalable de tous les panneaux de brassage.

La solution au problème technique posé, selon la présente invention, est obtenue par le dispositif de précâblage présentant les caractéristiques énoncées à la revendication 5.

Ainsi, le dispositif de précâblage conforme à l'invention permet d'organiser l'installation de câblage de manière différente, en ce sens que les tubes de précâblage pourront être gérés indépendamment des câbles et des panneaux de brassage. En effet, comme on le verra en détail plus loin, il est possible, grâce à l'invention, de mettre en place les tubes de précâblage dans l'installation sans avoir à investir au préalable dans les panneaux de brassage. Les câbles seront acheminés sur des panneaux de brassage achetés au fil de la demande, assurant ainsi une utilisation optimale des panneaux en matière de coût.

L'invention facilite donc la gestion des tubes et du câblage, ainsi que l'opération de soufflage lorsque, avantageusement, lesdits tubes de précâblage sont des tubes de soufflage.

La mise en oeuvre du dispositif de précâblage, objet de l'invention, est réalisée conformément à un procédé qui, selon l'invention, comporte les étapes enoncées à la revendication 1.

Dans un mode de mise en oeuvre particulier du procédé conforme à l'invention, l'introduction dudit câble est effectuée par soufflage dans un tube de soufflage.

Selon une variante de réalisation avantageuse, le dispositif de précâblage selon l'invention comporte également au moins un deuxième module d'arrimage auquel des tubes de raccordement sont fixés au voisinage d'une première extrémité.

Dans ce cas, on prévoit que, conformément à l'invention, l'étape de connecter ledit câble au panneau de brassage comprend une première étape consistant à introduire le câble dans un tube de raccordement à travers ladite première extrémité et à fixer ledit tube de raccordement au panneau de brassage par une deuxième extrémité. L'introduction d'un câble se fait par exemple par simple poussage manuel.

La description qui va suivre en regard des dessins annexés, donnés à titre d'exemples non limitatifs, fera bien comprendre en quoi consiste l'invention et comment elle peut être réalisée.

La figure 1 est une vue de côté d'une baie de câblage munie d'un dispositif de précâblage conforme à l'invention.

La figure 2 représente la baie de câblage de la figure 1 munie également d'un module d'arrimage pour tubes de raccordement.

La figure 3 est une vue en perspective d'un module d'arrimage montré aux figures 1 et 2.

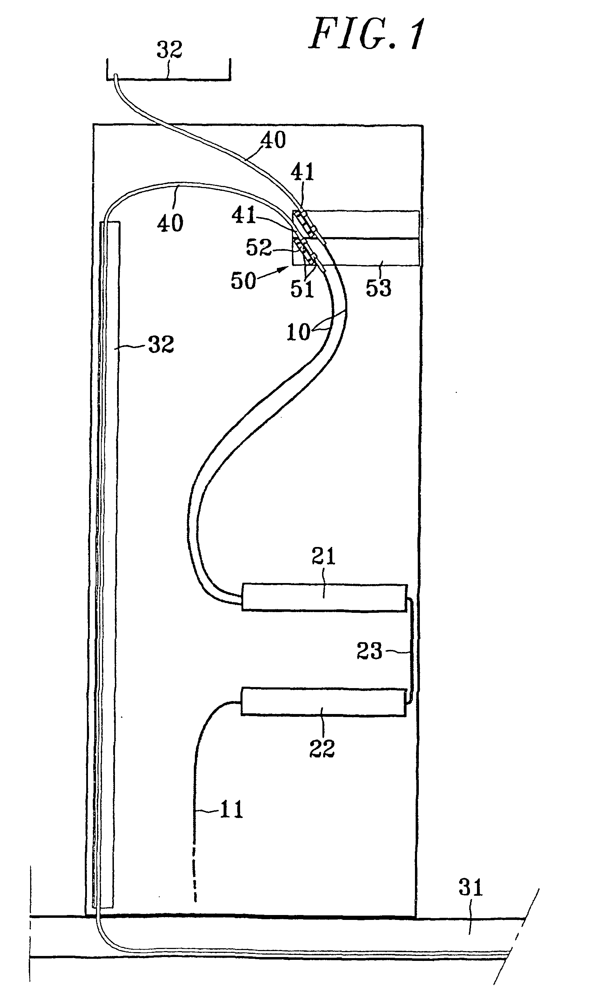

L'installation de câblage, ici une baie de câblage, représentée sur la figure 1 constitue, par exemple, un répartiteur d'étage d'un bâtiment, destiné à tirer des câbles 10 de distribution, à fibres optiques notamment, dits câbles horizontaux, entre au moins un panneau 21 de brassage (tiroir ou plateau) et divers points d'accès de l'étage à travers des faux-planchers 31 et/ou des chemins 32 de câbles. Le panneau 21 de brassage est relié par une jarretière 23 posée face avant de la baie à un tiroir 22 d'équipement.

Dans la réalisation de la figure 1, le câblage est effectué au moyen d'une pluralité de tubes 40 de précâblage qui sont mis en place au départ à l'intérieur de la baie pour desservir les divers points d'accès en passant par les faux-planchers 31 et les chemins 32 de câbles. Ces tubes 40 de précâblage sont destinés à recevoir les câbles 10 de distribution, lesquels sont introduits dans les tubes 40 au fur et à mesure des besoins.

Comme on peut le voir sur la figure 1, la baie de câblage est équipée d'un dispositif de précâblage comprenant, outre les tubes 40 de précâblage, ici deux modules 50 d'arrimage auxquels chacun desdits tubes 40 est fixé au voisinage d'une extrémité 41.

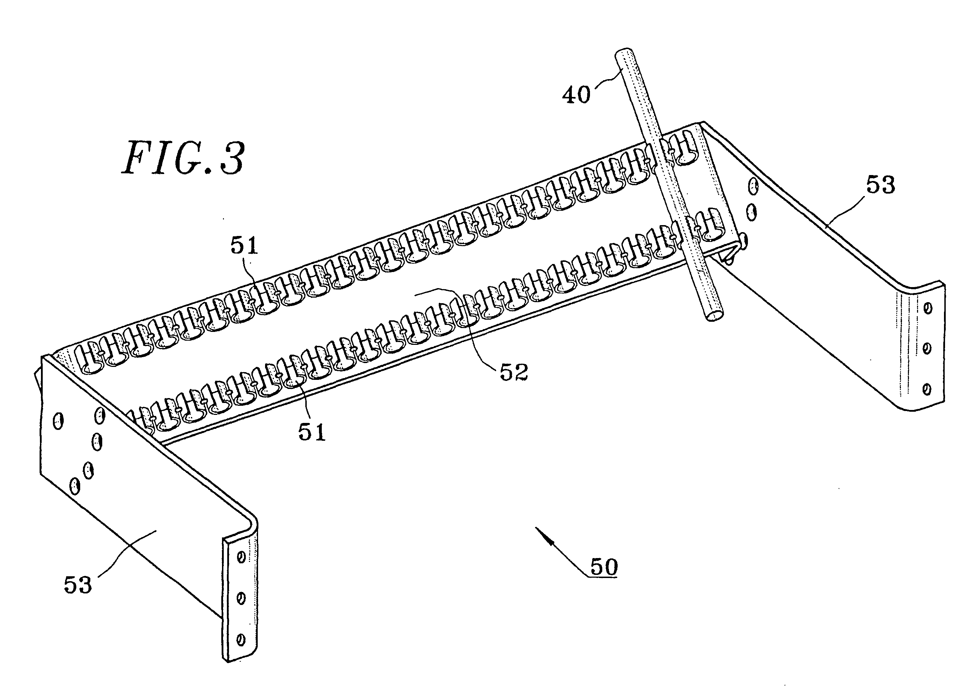

La figure 3 montre un mode de réalisation particulier d'un module 50 d'arrimage comportant une plaque-support 52 qui se fixe aux montants verticaux de la baie de câblage par des pattes 53 de liaison. La plaque-support 52 présente une inclinaison pour limiter la courbure des tubes de précâblage qui y sont arrimés à l'aide de deux rangées de moyens 51 de fixation rapide par simple pression manuelle, du type clipsage par exemple. Ces moyens 51 sont utilisés en double pour assurer l'immobilité des tubes au moment de l'introduction des câbles.

Lors de l'installation de la baie, tous les tubes 40 de précâblage sont mis en place sur le(s) module(s) 50 d'arrimage, en situation d'attente. Puis, selon le procédé conforme à l'invention, un premier panneau 21 de brassage est mis en place dans la baie de câblage. Un câble 10 de distribution est ensuite introduit dans au moins un des tubes 40 de précâblage à travers l'extrémité 41 des tubes fixée sur le module 50 d'arrimage. Enfin, le câble 10 est connecté à l'arrière du panneau 21 de brassage et la jarretière 23 est posée entre le panneau 21 et le tiroir 22 d'équipement. Les câbles 10 de distribution sont ainsi installés progressivement en fonction de la demande, il en est de même pour les panneaux 21 de brassage.

L'invention se prête particulièrement bien au soufflage de câbles 10 de distribution. Dans ce cas, il est prévu que les tubes 40 de précâblage sont des tubes de soufflage et que l'introduction des câbles est effectuée par soufflage dans un desdits tubes de soufflage.

On observera que les modules 50 d'arrimage permettent l'accès à tous les tubes 40 en face avant de la baie, facilitant ainsi l'opération de soufflage. Egalement, les câbles 10 soufflés sont acheminés jusqu'au panneau 21 par un chemin toujours accessible.

La figure 3 montre que les modules 50 d'arrimage autorisent la fixation d'un très grand nombre de tubes 40 de précâblage. Le nombre de modules 50 est adapté en fonction du nombre de tubes que met en jeu le câblage. Pour rendre le dispositif de précâblage, objet de l'invention, encore plus économique, il est préféreable de ne pas équiper les modules d'arrimage des raccords pneumatiques nécessaires au soufflage des câbles.

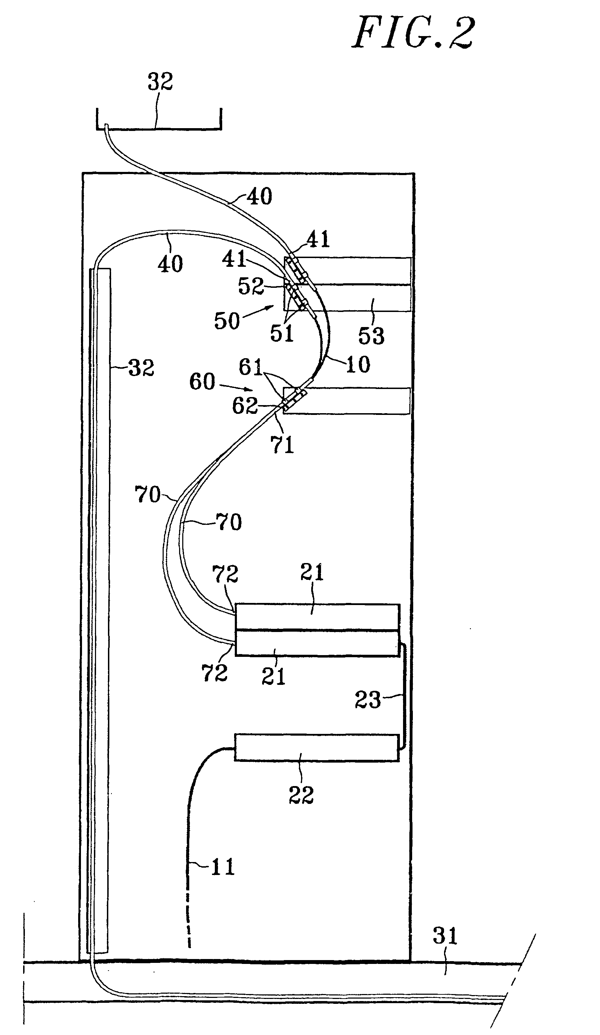

La figure 2 fait apparaître un deuxième module 60 d'arrimage auxquels des tubes 70 de raccordement sont fixés au voisinage d'une première extrémité 71. Ce deuxième module 60 d'arrimage peut être identique au module 50 d'arrimage montré à la figure 3 et présenter des moyens 61 de fixation rapide, clipsage par exemple, pour les tubes 70 de raccordement.

Lesdits tubes 70 de raccordement ont pour fonction de protéger les câbles 10 de distribution, notamment les câbles de soufflage particulièrement fragiles, entre la sortie des tubes 40 de précâblage et le panneau 21 de brassage. A cet effet, après avoir été soufflé dans le tube 40, le câble 10 est introduit par poussage manuel dans un tube 70 de raccordement à travers la première extrémité 71 fixée au deuxième module 60 d'arrimage et ledit tube 70 de raccordement est lui-même fixé au panneau 21 de brassage par une deuxième extrémité 72. Le câble 10 est ensuite connecté au panneau 21.

## Revendications

1. Procédé de câblage dans une installation de câblage, **caractérisé en ce que** ledit procédé comporte les étapes consistant à :
- mettre en place dans ladite installation de câblage au moins un module (50) d'arrimage muni de moyens (51) de fixation,
- fixer sur lesdits moyens (51) de fixation une pluralité de tubes (40) de précâblage au voisinage de leur extrémité (41),
- mettre en place un panneau (21) de brassage dans l'installation de câblage,
- introduire un câble (10) dans un desdits tubes (40) de précâblage à travers l'extrémité (41) dudit tube fixée au module (50) d'arrimage,
- connecter ledit câble au panneau (21) de brassage.

2. Procédé de câblage selon la revendication 1, **caractérisé en ce que** l'introduction dudit câble (10) est effectuée par soufflage dans un tube de soufflage.

3. Procédé de câblage selon l'une des revendications 1 ou 2, **caractérisé en ce que** l'étape de connecter ledit câble (10) au panneau (21) de brassage comprend une première étape consistant à mettre en place dans l'installation de câblage un deuxième module (60) d'arrimage muni de deuxièmes moyens (61) de fixation, à fixer sur lesdits deuxièmes moyens (61) une pluralité de tubes (70) de raccordement au voisinage de leur extrémité (71), à introduire le câble (10) dans un tube (70) de raccordement à travers ladite première extrémité (71) et à fixer ledit tube (70) de raccordement au panneau (21) de brassage par une deuxième extrémité (72).

4. Procédé de câblage selon la revendication 3, **caractérisé en ce que** le câble (10) est introduit dans le tube (70) de raccordement par poussage manuel.

5. Dispositif de précablâge pour la mise en oeuvre du procédé de câblage selon l'une quelconque des revendications 1 à 4, **caractérisé en ce que** ledit dispositif comprend, à l'intérieur de l'installation de câblage :
- au moins un module (50) d'arrimage muni de moyens (51) de fixation,
- une pluralité de tubes (40) de précâblage destinés à recevoir des câbles (10), lesdits tubes étant fixés auxdits moyens (51) de fixation au voisinage de leur extrémité (41),
- un panneau (21) de brassage auquel lesdits câbles (10) sont destinés à être connectés.

6. Dispositif de précâblage selon la revendication 5, **caractérisé en ce que** lesdits moyens (51) de fixation sont des moyens de fixation rapide des tubes (40) de précâblage.

7. Dispositif de précâblage selon l'une des revendications 5 ou 6, **caractérisé en ce que** les tubes (40) de précâblage sont des tubes de soufflage.

8. Dispositif de précâblage selon l'une quelconque des revendications 5 à 7, **caractérisé en ce qu'**il comporte également au moins un deuxième module (60) d'arrimage auquel des tubes (70) de raccordement sont fixés au voisinage d'une première extrémité (71).

9. Dispositif de précâblage selon la revendication 8, **caractérisé en ce que** ledit deuxième module (60) d'arrimage comporte des moyens (61) de fixation rapide des tubes (70) de raccordement.

## Patentansprüche

1. Verkabelungsverfahren in einer Verkabelungsanlage, **dadurch gekennzeichnet, dass** das genannte Verfahren die folgenden Stufen umfasst, bestehend aus:
- Der Einrichtung wenigstens eines mit Befestigungsmitteln (51) versehenen Moduls (50) zum Verstauen in der genannten Verkabelungsanlage, dem Befestigen einer Vielzahl von Vorverkabelungsröhren (40) auf den genannten Befestigungsmitteln (51) in der Nähe von deren Ende (41),
- Der Einrichtung einer Mischtafel (21) in der Verkabelungsanlage
- Der Einführung eines Kabels (10) in einem der genannten Vorverkabelungsröhren (40) über das am Modul (50) zum Verstauen befestigte Ende (41) der genannten Röhre,
- Den Anschluss des genannten Kabels an die Mischtafel (21).

2. Verkabelungsverfahren gemäß Anspruch 1, **dadurch gekennzeichnet, dass** das Einführen des genannten Kabels (10) durch Einblasen in eine Einblasröhre erfolgt.

3. Verkabelungsverfahren gemäß Anspruch 1 oder 2, **dadurch gekennzeichnet, dass** die Anschlussstufe des genannten Kabels (10) an die Mischtafel (21) eine erste Stufe umfasst, die in der Einrichtung eines mit zweiten Befestigungsmitteln (61) versehenen zweiten Moduls (60) zum Verstauen in der Verkabelungsanlage, der Befestigung einer Vielzahl von Anschlussröhren (70) auf den genannten zweiten Mittel (61) in der Nähe von deren Ende (71), in der Einführung des Kabels (10) in eine Anschlussröhre (70) über das genannte erste Ende (71) und in der Befestigung der genannten Anschlussröhre (70) an der Mischtafel (21) durch ein zweites Ende (72) besteht.

4. Verkabelungsverfahren gemäß Anspruch 3, **dadurch gekennzeichnet, dass** das Kabel (10) durch manuelles Schieben in die Anschlussröhre (70) eingeführt wird.

5. Verkabelungsvorrichtung für die Umsetzung des Verkabelungsverfahrens gemäß Anspruch 1 bis 4, **dadurch gekennzeichnet, dass** die genannte Vorrichtung im Innern der Verkabelungsanlage Folgendes umfasst:
- Wenigstens ein mit Befestigungsmitteln (51) versehenes Modul (50) zum Verstauen,
- eine Vielzahl von zur Aufnahme der Kabel (10) bestimmten Vorverkabelungsröhren (40), wobei die genannten Röhren in der Nähe ihres Endes (41) an den genannten Befestigungsmitteln (51) befestigt sind,
- eine Mischtafel (21), an die die genannten Kabel (10) angeschlossen werden sollen.

6. Vorverkabelungsvorrichtung gemäß Anspruch 5, **dadurch gekennzeichnet, dass** die genannten Befestigungsmittel (51) Mittel zur schnellen Befestigung des Vorverkabelungsröhren (40) sind.

7. Vorverkabelungsvorrichtung gemäß Anspruch 5 oder 6, **dadurch gekennzeichnet, dass** die Vorverkabelungsröhren (40) Einblasröhren sind.

8. Vorverkabelungsvorrichtung gemäß Anspruch 5 bis 7, **dadurch gekennzeichnet, dass** es ebenfalls wenigstens ein zweites Modul (60) zum Verstauen umfasst, an dem die Anschlussröhren (70) in der Nähe eines ersten Endes (71) befestigt sind.

9. Vorverkabelungsvorrichtung gemäß Anspruch 8, **dadurch gekennzeichnet, dass** das genannte zweite Modul (60) zum Verstauen Mittel (61) zur schnellen Befestigung der Anschlussröhren (70) umfasst.

## Claims

1. A method of cabling in a cabling installation, the method being **characterized in that** it comprises the steps consisting in:
- putting at least one stowage module (50) into place in said cabling installation, the stowage module being provided with fixing means (51);
- fixing a plurality of precabling tubes (40) to said fixing means (51), each tube being fixed in the vicinity of an end (41) thereof;
- putting a cross-connect panel (21) into place in the cabling installation;
- inserting a cable (10) into one of said precabling tubes (40) via the end (41) of said tube that is fixed to the stowage module (50); and
- connecting said cable to the cross-connect panel (21).

2. A method of cabling according to claim 1,
**characterized in that** said cable (10) is inserted into a blow tube by blowing.

3. A cabling method according to claim 1 or claim 2,
**characterized in that** the step of connecting said cable (10) to the cross-connect panel (21) comprises a first step consisting in putting a second stowage module (60) into place in the cabling installation, the second module being provided with second fixing means (61), in fixing a plurality of connection tubes (70) to said second means (61), each of said connection tubes (70) being fixed in the vicinity of an end (71) thereof, in inserting the cable (10) into a connection tube (70) via said first end (71), and in fixing said connection tube (70) to the cross-connect panel (21) via a second end (72).

4. A cabling method according to claim 3, **characterized in that** the cable (10) is inserted into the connection tube (70) by being pushed in manually.

5. A precabling device for implementing the cabling method according to any one of claims 1 to 4, the device being **characterized in that** it comprises, in the cabling installation:
- at least one stowage module (50) provided with fixing means (51);
- a plurality of precabling tubes (40) for receiving cables (10), each of said tubes being fixed to said fixing means (51) in the vicinity of an end (41) thereof; and
- a cross-connect panel (21) to which said cables (10) are to be connected.

6. A precabling device according to claim 5,
**characterized in that** said fixing means (51) are quick-fixing means for fixing the precabling tubes (40).

7. A precabling device according to claim 5 or claim 6,
**characterized in that** the precabling tubes (40) are blow tubes.

8. A precabling device according to any one of claims 5 to 7, **characterized in that** it also comprises at least one second stowage module (60) to which connection tubes (70) are fixed, each tube being fixed in the vicinity of a first end (71) thereof.

9. A precabling device according to claim 8,
**characterized in that** said second stowage module (60) has quick-fixing means (61) for fixing the connection tubes (70) .
